# EUROPÄISCHE PATENTSCHRIFT

(11) **EP 3 611 828 B1**
(45) Veröffentlichungstag und Bekanntmachung des Hinweises auf die Patenterteilung: **17.09.2025**
(21) Anmeldenummer: 18189260.5
(22) Anmeldetag: 16.08.2018
(51) Int. Cl.: H02K 5/128, H02K 9/04, H02K 5/10

(54) **DYNAMOELEKTRISCHE ROTATORISCHE MASCHINE MIT EINER LUFTSPALTKAPSELUNG**
DYNAMOELECTRIC ROTARY MACHINE WITH AIR GAP ENCAPSULATION
MACHINE TOURNANTE DYNAMOÉLECTRIQUE DOTÉ D'UN BLINDAGE DE FENTE D'AÉRATION

(43) Veröffentlichungstag der Anmeldung: 19.02.2020
(73) Patentinhaber: Flender GmbH, 46395 Bocholt (DE)
(72) Erfinder: Körner, Olaf, 90469 Nürnberg (DE); Pfannschmidt, Bernd, 90574 Rosstal (DE); Stapfner, Johann, 90547 Stein (DE)
(74) Vertreter: Michalski Hüttermann & Partner Patentanwälte mbB

(56) Entgegenhaltungen:
- EP-A1- 1 271 747
- WO-A2-2012/085281
- DE-A1- 102005 057 177
- JP-A- 2003 158 839
- JP-A- S62 268 335
- US-A1- 2012 212 086

## Beschreibung

Dynamoelektrische rotatorische durchzugsbelüftete Maschine nach dem Oberbegriff des Anspruchs 1.

Bei dynamoelektrisch rotatorischen Maschinen, die durchzugsbelüftet sind und die in ihrem Rotor Permanentmagnete aufweist, besteht die Gefahr, dass sich im Luftspalt dieser dynamoelektrisch rotatorischen Maschine magnetische Partikel aus der Kühlluft im Luftspalt bzw. auf der Oberfläche des Rotors ansammeln. Über einen längeren Zeitraum hinweg kann sich damit der Luftspalt mit Partikeln zusetzen und dadurch die Maschine beschädigt werden oder blockieren. Des Weiteren erhöhen bereits einige wenige Partikel auf dem Rotor die Streufelder und führen damit zu zusätzlichen Verlusten.

Den Luftspalt abzudichten ist bereits aus der US 2006/0226717 A1 oder auch der EP 2 256 907 A1 bekannt. Außerdem ist es bekannt, den kompletten Rotor abzudichten, wie dies der DE 10 2005 057 177 A1 zu entnehmen ist.

Aus der US 2012/212 086 A1 ist ein Elektromotor mit Stator mit Wicklungen und innenliegendem Rotor bekannt, der mit einem Gebläse Kühlluft bewegt. Diese Luft gelangt auch durch den Luftspalt.

Aus der EP 1 271 747 A1 ist ein Elektromotor bekannt, der einen luftgekühlten Stator und einen gekapselten, ungekühlten Rotor aufweist.

Aus der JP 2003 158 839 A ist ebenfalls ein luftgekühlter Motor bekannt.

Aus der WO 2012/ 085 281 A2 ist eine elektrische Maschine bekannt, bei der der Stator flüssigkeitsgekühlt ist und durch ein Spaltrohr gegenüber dem Rotor fluiddicht abgedichtet ist.

Aus der JP S62 268 335 A ist eine rotierende elektrische Maschine bekannt, mit einem Stator, der ein in im wesentlich axial verlaufenden Nuten angeordnetes Wicklungssystem in einer Aktivteillänge des Stators aufweist, das an den axialen Stirnseiten dieses Stators jeweils einen Wickelkopf ausbildet, wobei zur Durchzugsbelüftung des Stators Öffnungen für Außenluft und Kühlkanäle im Stator für die Außenluft vorgesehen sind, und mit einem Rotor, der von dem Stator durch einen Luftspalt beabstandet ist, wobei der Rotor drehfest auf einer Welle positioniert ist, die sich über Lager in einem Lagerschild abstützt, wobei der Rotor an seinen axialen Stirnseiten Elemente mit einem axialen Fortsatz aufweist, wobei zur Durchzugsbelüftung des Rotors Öffnungen für Außenluft und Kühlkanäle im Rotor für die Außenluft vorgesehen sind. Diese Vorrichtung bildet den Oberbegriff des Anspruchs 1.

Ausgehend davon liegt der Erfindung die Aufgabe zugrunde, eine dynamoelektrisch rotatorische Maschine mit vergleichsweise geringem Aufwand zu schaffen, die auch für eine Durchzugsbelüftung einer derartigen Maschine in ausreichendem Maße einen sicheren Betrieb gewährleisten kann, indem Ablagerungen magnetischer Teilchen im Luftspalt verhindert werden.

Die Lösung der gestellten Aufgabe gelingt durch eine dynamoelektrische rotatorische durchzugsbelüftete Maschine mit den Merkmalen des Anspruchs 1. Ausführungen der Erfindung, ein Traktionsfahrzeug und eine Windkraftanlage sind Gegenstände von Unteransprüchen.

Durch Ausbilden eines Trägerrings, der am Lagerschild angeordnet ist oder Teil des Lagerschildes ist, werden mit weiteren Elementen der dynamoelektrisch rotatorischen Maschine statische und dynamische Dichtungen ausbildet. Das Lagerschild und der Trägerring können somit einstückig oder aus zwei, drei oder mehreren Einzelkomponenten zusammengesetzt sein.

Durch diese Dichtungen wird nunmehr speziell der Luftspalt zwischen Stator und Rotor abgedichtet, um das Eintreten von Partikeln, die sich an Permanentmagneten des Rotors anhaften können zu vermeiden. Diese Partikel können sich im Luftspalt der dynamoelektrischen Maschinen festsetzen und so zu einer Erhöhung der Streuverluste beitragen. Als worst-case können diese Partikel sogar den Luftspalt zusetzen und damit eine Rotation des Rotors erschweren oder gar verhindern.

Es ist erfindungsgemäß somit keine komplett gekapselte Maschine mehr notwendig, da die luftführenden Kanäle im Rotor und Stator weiterhin mit der Außenluft beaufschlagt werden können ohne den Luftspalt zuzusetzen.

Dies ist insbesondere dann vorteilhaft, wenn derartige Maschinen bei Traktionsantrieben, also im Schienenverkehr, bei Mining-Trucks oder bei elektrischen Antrieben von Fahrzeugen im Straßenverkehr eingesetzt werden, die mit Außenluft, die ggf. schädliche Partikel enthält, gekühlt werden soll.

Erfindungsgemäß wird nunmehr der Bau von vergleichsweise gro-ßen und leistungsstarken kompakten permanenterregten Maschinen ermöglicht, die eine vergleichsweise einfache Luftkühlung, sei es eigenbelüftet oder fremdbelüftet aufweisen. Aufwändige Wassermantelkühlungen werden damit vermieden.

Die statischen Dichtungen können dabei durch Filzmatten am Wickelkopf oder als Dichtlippen aus Isolationsmaterial ausgeführt sein. Diese beispielhaften Dichtelemente des Wickelkopfes sind nur an vorgegebenen Abschnitten auf der radialen Innenseite des Wickelkopfes angeordnet, um die Kühlwirkung nicht zu beeinträchtigen. Sie entfalten ihre statische Dichtwirkung jeweils zusammen mit den dazu korrespondierenden Gegenelementen auf dem Trägerring des Lagerschilds.

Des Weiteren bilden der Trägerring des Lagerschilds zusammen mit axialen Fortsätzen der stirnseitig am Rotor angeordneten Elemente eine dynamische Dichtung, insbesondere eine Labyrinthdichtung, um ebenfalls die Partikel vom Luftspalt der dynamoelektrischen Maschine abzuhalten.

Vor allem bei sehr kompakten, beispielsweise axial vergleichsweise kurzen Aktivteillängen eines Stators wie scheibenförmige Maschinen in Radialflux-Anordnung, ist erfindungsgemäß weiterhin eine ausreichende Kühlung vor allem des Wickelkopfbereichs gewährleistet. Die Außenluft kann weiterhin die Wickelköpfe kühlen, ohne dass aufwändige Lösungen zur Kühlung bzw. zur Abschottung des Luftspaltes vor Partikeln bereitgestellt werden müssen. Dabei ist die Leiterlänge einer Spule des Wicklungssystems, insbesondere eine Kupferspulenlänge in einer Nut gleich oder kleiner der Leiterlänge dieser Spule im Wickelkopf.

Erfindungsgemäß ist vor allem bei diesen Maschinen weiterhin eine ausreichende Kühlung des Wickelkopfes durch Außenluft gewährleistet und möglich, der bei einer abgeschotteten komplett geschlossenen Maschine nur unzureichend oder nur mit hohem Aufwand gekühlt werden kann. Durch die Außenluft kann auch der Stator und/oder der Rotor gekühlt werden. Die auf der Aktivteillänge des Stators anfallende Wärme wird auch bei axial kurzen Maschinen zum Teil über das Gehäuse abgeführt.

Die Erfindung sowie weitere vorteilhafte Ausgestaltungen der Erfindung werden anhand eines Ausführungsbeispiels näher erläutert; dabei zeigen:
- FIG 1: einen Teil-Längsschnitt einer dynamoelektrisch rotatorischen Maschine,
- FIG 2: prinzipielle Darstellung von Längenverhältnissen des Wicklungssystems.

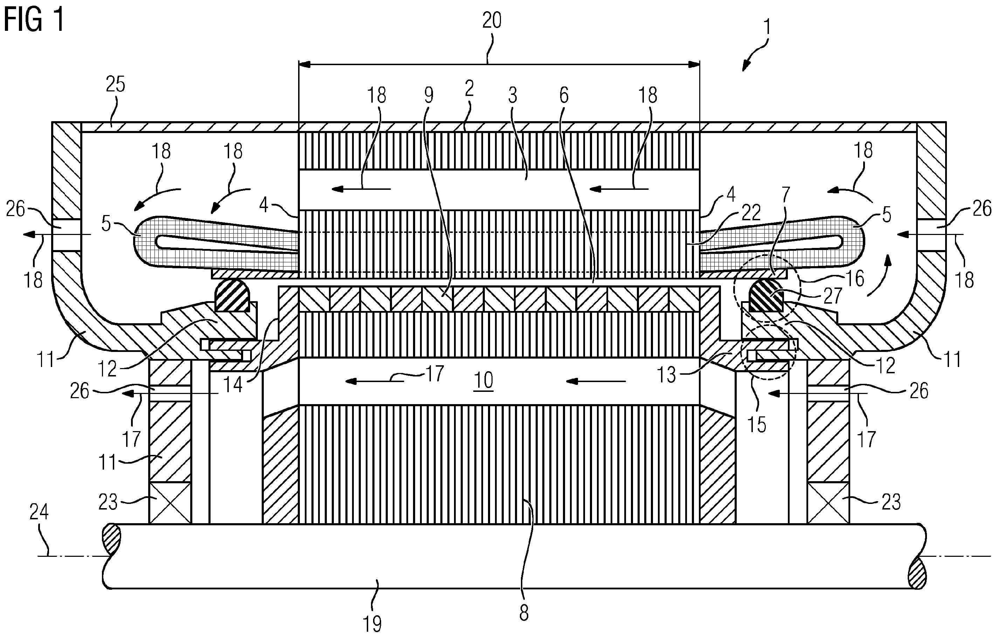

FIG 1 zeigt in einem Teil-Längsschnitt eine dynamoelektrisch rotatorische Maschine 1, die durchzugsbelüftet ist, also Außenluft als Kühlluft 17, 18 für einen Rotor 8 und/oder einen Stator 2 bereitstellt. Diese Kühlluft wird durch nicht näher dargestellte Lüfter bereitgestellt, die als Eigenlüfter oder Fremdlüfter ausgebildet sein können.

Innerhalb eines Gehäuses 25 ist dabei ein Stator 2 angeordnet, der axiale verlaufende Statorkühlkanäle 3 aufweist. Der Stator 2 ist in diesem Fall geblecht ausgeführt, kann aber ebenso auch andere magnetfeldführende Elemente aufweisen, z.B. als ein einstückiges Stück gesintertes Teil ausgeführt sein.

In nicht näher dargestellten im Wesentlichen axial verlaufenden Nuten 22 des Stators 2 verläuft ein Wicklungssystem 21, das an den Stirnseiten 4 des Stators 2 Wickelköpfe 5 ausbildet.

An der radialen Innenseite des Wickelkopfes 5 ist zumindest über einen vorgegebenen axialen Bereich eine in Umfangsrichtung betrachtet geschlossenen Dichtfläche 7 angebracht. Diese Dichtfläche kann beispielsweise angeklebt sein.

Von einem Luftspalt 6 beabstandet, befindet sich radial weiter Innen ein Rotor 8, der Permanentmagnete 9 aufweist. Der Rotor 8 kann somit Teil eines Reluktanzläufers mit Permanentmagneten 9 als auch ein reiner permanenterregter Rotor 8 sein. Die Permanentmagnete 9 können dabei, wie gezeigt an der Oberfläche des Rotors 8 angeordnet sein. Ebenso können diese Permanentmagnete 9 auch "vergraben" im Blechpaket des Rotors 8 sein.

Der Rotor 8 weist ebenfalls axial verlaufende Rotorkühlkanäle 10 auf, die von Außenluft durchströmbar sind.

Der Rotor 8 ist mit einer Welle 19 drehfest verbunden, die um eine Achse 24 drehbar gelagert ist. Die Welle 19 ist somit über Lager 23 in einem Lagerschild 11 gehalten, das jeweils einen Trägerring 12 aufweist. An dem Trägerring 12 des Lagerschilds 11 sind Mittel vorhanden, die eine dynamische Dichtung 15 und eine statische Dichtung 16 im Zusammenwirken mit dementsprechenden Elementen des Rotors 8 bzw. des Wickelkopfes 5 bewirken.

Das Lagerschild 11 und der Trägerring 12 können einstückig oder aus zwei, drei oder mehreren Einzelkomponenten zusammengesetzt sein. Ebenso kann der Trägerring 12 mit seinen die dynamische Dichtung bildenden Gegenelementen einstückig oder mehrteilig ausgeführt sein.

Die statische Dichtung 16 wird dabei durch einen Gegenelement gebildet, das am Trägerring 12 angeordnet ist und sich an die Dichtfläche 7 des Wickelkopfes 5 drückt. Aufgrund spannungsführender Teile im Wickelkopf 5 ist das Gegenelement, beispielsweise eine Dichtlippe, aus Isolationswerkstoff. Um die Dichtwirkung zu verbessern, können auch zwei oder mehrere derartige Dichtlippen axial hintereinander und in Umfangrichtung betrachtet umlaufend angeordnet sein. Diese Dichtlippen drücken sich dabei jeweils an die Dichtfläche 7, die dann natürlich auch eine dementsprechende axiale Erstreckung am Wickelkopf 5 aufweisen muss.

Die dynamische Dichtung, die als Labyrinthdichtung ausgeführt sein kann, wird durch einen dementsprechenden axialen Fortsatz eines Elementes 13 an der Stirnseite 14 des Rotors 8 und dementsprechend ausgebildete dazu korrespondierend verlaufende Elemente am Trägerring 12 des Lagerschildes 11 gebildet.

Je nach Größe und Typ der Maschine 1 lassen sich derartige Maschinenteile, wie Trägerring 12 und/oder Lagerschild 11 leichter aus einem oder mehreren Komponenten aufbauen.

Öffnungen 26 im Lagerschild 11 und/oder Gehäuse 25 dienen dem Einlass bzw. Auslass der Kühlluft 17, 18 in bzw. aus der Maschine 1.

Durch die Abdichtung des Luftspaltes 6 der dynamoelektrischen Maschine 1 ist nunmehr im Stillstand, aber auch im Betrieb dieser dynamoelektrischen Maschine 1 gewährleistet, dass in den Luftspalt 6 keine Partikel, insbesondere keine magnetischen Partikel gelangen.

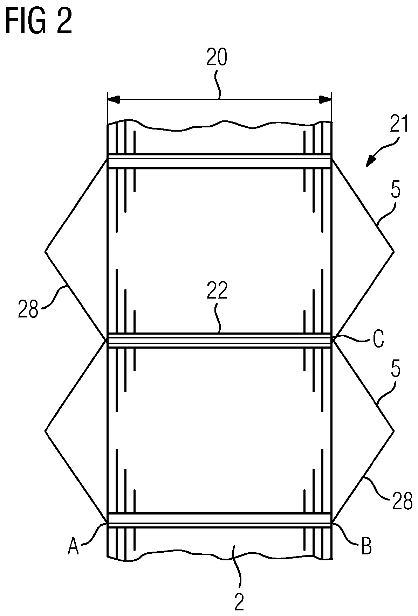

FIG 2 zeigt in einer prinzipiellen Darstellung die geometrischen Längenverhältnissen des Wicklungssystems 21. Diese Aktivteillänge 20 eines Stators 2 ist vergleichsweise kurz, stellt somit eine scheibenförmige Maschine in Radialflux-Anordnung dar. Dabei ist die Leiterlänge einer Spule 28 des Wicklungssystems 21, insbesondere eine Kupferspulenlänge in der Nut 22, also von Punkt A bis B, gleich oder kleiner der Leiterlänge BC der Spule 28 im Wickelkopf 5.

Erfindungsgemäß ist vor allem bei diesen Maschinen weiterhin eine ausreichende Kühlung des Wickelkopfes 5 gewährleistet, der bei einer geschlossenen Maschine nur unzureichend oder nur mit hohem Aufwand gekühlt werden kann. Die auf der Aktivteillänge 20 des Stators 2 anfallende Wärme wird bei axial kurzen Maschinen auch über das Gehäuse 25 abgeführt.

Somit lassen sich nunmehr kompakte, auch vergleichsweise axial kurze, leistungsstarke, durchzugsbelüftete dynamoelektrischen Maschine 1, insbesondere auch bei Traktionsfahrzeugen, wie Schienenfahrzeugen, Miningtrucks oder Fahrzeugen im Straßenverkehr einsetzen.

Die erfinderische Luftspaltkapselung ist auch im Einsatz bei Generatoren von Windkraftanlagen, insbesondere wenn durch Außenluft, ggf. entfeuchtet, gekühlt werden soll.

## Patentansprüche

1. Dynamoelektrische rotatorische durchzugsbelüftete Maschine (1) mit
- einem Stator (2), der ein in im wesentlich axial verlaufenden Nuten (22) angeordnetes Wicklungssystem (21) in einer Aktivteillänge (20) des Stators (2) aufweist, das an den axialen Stirnseiten (4) dieses Stators (2) jeweils einen Wickelkopf (5) ausbildet, wobei zur Durchzugsbelüftung des Stators (2) Öffnungen (26) für Außenluft und Kühlkanäle (3) im Stator (2) für die Außenluft (18) vorgesehen sind,
- einem Rotor (8), der von dem Stator (2) durch einen Luftspalt (6) beabstandet ist, wobei der Rotor (8) drehfest auf einer Welle (19) positioniert ist, die sich über Lager (23) in einem Lagerschild (11) abstützt, wobei der Rotor (8) an seinen axialen Stirnseiten (14) Elemente (13) mit einem axialen Fortsatz aufweist, wobei zur Durchzugsbelüftung des Rotors (8) Öffnungen (26) für Außenluft und Kühlkanäle (10) im Rotor (8) für die Außenluft (17) vorgesehen sind,
**dadurch gekennzeichnet, dass** der Wickelkopf (5) an seiner radialen Innenseite ein Dichtelement aufweist, dass der Rotor (8) Permanentmagnete (9) aufweist, und dass das Lagerschild (11) einen Trägerring (12) aufweist, der Mittel zur statischen und dynamischen Dichtung (16, 15) aufweist, indem durch Zusammenwirken mit dem Dichtelement (7) am Wickelkopf (5) eine statische Dichtung (16) und den Elementen (13) mit den axialen Fortsätzen am Rotor (8) eine dynamische Dichtung (15) bereitgestellt wird, um den Luftspalt abzudichten.

2. Dynamoelektrische rotatorische Maschine (1) nach Anspruch 1, **dadurch gekennzeichnet, dass** das Dichtelement als Dichtfläche (7) am Wickelkopf (5) ausgebildet ist.

3. Dynamoelektrische rotatorische Maschine (1) nach Anspruch 2, **dadurch gekennzeichnet, dass** die Dichtfläche (7) am Wickelkopf (5) als eine dort anordenbare Filzmatte ausgebildet ist.

4. Dynamoelektrische rotatorische Maschine (1) nach Anspruch 1, **dadurch gekennzeichnet, dass** die statische Dichtung (7) zumindest eine Dichtlippe aus Isolationsmaterial aufweist.

5. Dynamoelektrische rotatorische Maschine (1) nach einem der vorhergehenden Ansprüche, **dadurch gekennzeichnet, dass** der Trägerring (12) am Lagerschild (11) zumindest einen im Umfangsrichtung betrachtet radialen Fortsatz (27) aufweist, der mit dem Dichtelement, insbesondere der Dichtfläche (7) am Wickelkopf (5) eine statische Dichtung (16) bildet.

6. Dynamoelektrische rotatorische Maschine (1) nach einem der vorhergehenden Ansprüche, **dadurch gekennzeichnet, dass** der Trägerring (12) am Lagerschild Gegenelemente aufweist, die zusammen mit Elementen (13) am Rotor (8) eine Labyrinthdichtung als dynamische Dichtung (15) bildet.

7. Dynamoelektrische rotatorische Maschine (1) nach einem der vorhergehenden Ansprüche, **dadurch gekennzeichnet, dass** die Leiterlänge (AB) einer Spule (28) des Wicklungssystems (21) in der Aktivteillänge (20) des Stators (2) kleiner oder gleich der Leiterlänge (BC) dieser Spule (28) im Wickelkopf 5 ist.

8. Traktionsfahrzeug, insbesondere Schienenfahrzeug, E-Bus oder Miningtruck mit zumindest einer dynamoelektrischen rotatorischen Maschine (1) nach einem der vorhergehenden Ansprüche.

9. Windkraftanlage mit zumindest einer dynamoelektrischen rotatorischen Maschine (1) nach einem der vorhergehenden Ansprüche 1 bis 7.

## Claims

1. Dynamo-electric rotary through-ventilated machine (1) comprising
- a stator (2) which has a winding system (21), arranged in substantially axially extending grooves (22), in an active-part length (20) of the stator (2), said winding system forming a winding head (5) at each of the axial end faces (4) of said stator (2), wherein, for through-ventilation of the stator (2), provision is made of openings (26) for outside air and cooling channels (3) in the stator (2) for the outside air (18),
- a rotor (8) which is spaced apart from the stator (2) by an air gap (6), wherein the rotor (8) is positioned rotationally conjointly on a shaft (19) which is supported via bearings (23) in a bearing shield (11), wherein, at its axial end faces (14), the rotor (8) has elements (13) with an axial extension, wherein, for through-ventilation of the rotor (8), provision is made of openings (26) for outside air and cooling channels (10) in the rotor (8) for the outside air (17),
**characterized in that** the winding head (5) has a sealing element at its radial inner side, **in that** the rotor (8) has permanent magnets (9), and **in that** the bearing shield (11) has a carrier ring (12) which has means for forming a static and a dynamic seal (16, 15), **in that** provision is made of a static seal (16) by way of interaction with the sealing element (7) on the winding head (5) and of a dynamic seal (15) by way of interaction with the elements (13) with the axial extensions on the rotor (8), in order to seal off the air gap.

2. Dynamo-electric rotary machine (1) according to Claim 1, **characterized in that** the sealing element is in the form of a sealing surface (7) on the winding head (5).

3. Dynamo-electric rotary machine (1) according to Claim 2, **characterized in that** the sealing surface (7) on the winding head (5) is in the form of a felt mat able to be arranged there.

4. Dynamo-electric rotary machine (1) according to Claim 1, **characterized in that** the static seal (7) has at least one sealing lip composed of insulation material.

5. Dynamo-electric rotary machine (1) according to one of the preceding claims, **characterized in that** the carrier ring (12) on the bearing shield (11) has at least one radial extension (27) when seen in the circumferential direction, said at least one radial extension forming together with the sealing element, in particular the sealing surface (7) on the winding head (5), a static seal (16).

6. Dynamo-electric rotary machine (1) according to one of the preceding claims, **characterized in that** the carrier ring (12) on the bearing shield has counterpart elements which form together with elements (13) on the rotor (8) a labyrinth seal as a dynamic seal (15).

7. Dynamo-electric rotary machine (1) according to one of the preceding claims, **characterized in that** the conductor length (AB) of a coil (28) of the winding system (21) in the active-part length (20) of the stator (2) is less than or equal to the conductor length (BC) of said coil (28) in the winding head (5).

8. Traction vehicle, in particular rail vehicle, electric bus or mining truck, comprising at least one dynamo-electric rotary machine (1) according to one of the preceding claims.

9. Wind turbine having at least one dynamo-electric rotary machine (1) according to one of preceding Claims 1 to 7.

## Revendications

1. Machine dynamo-électrique rotative (1) ventilée par courant d'air, comprenant
- un stator (2), qui possède un système d'enroulement (21) disposé dans des encoches (22) s'étendant sensiblement axialement dans une longueur de partie active (20) du stator (2), lequel forme sur les côtés frontaux axiaux (4) de ce stator (2) respectivement une tête d'enroulement (5), des ouvertures (26) pour l'air extérieur et des canaux de refroidissement (3) dans le stator (2) pour l'air extérieur (18) étant prévus pour la ventilation par courant d'air du stator (2),
- un rotor (8), qui est espacé du stator (2) par un entrefer (6), le rotor (8) étant positionné en rotation solidaire sur un arbre (19) qui s'appuie dans un flasque (11) par l'intermédiaire de paliers (23), le rotor (8) possédant sur ses côtés frontaux axiaux (14) des éléments (13) pourvus d'un prolongement axial, des ouvertures (26) pour l'air extérieur et des canaux de refroidissement (10) dans le rotor (8) pour l'air extérieur (17) étant prévus pour la ventilation par courant d'air du rotor (8),
**caractérisée en ce que** la tête d'enroulement (5) possède un élément d'étanchéité au niveau de son côté intérieur radial, **en ce que** le rotor (8) possède des aimants permanents (9), et **en ce que** le flasque (11) possède une bague porteuse (12) qui comporte des moyens servant à l'étanchéité statique et dynamique (16, 15), en fournissant une garniture d'étanchéité statique (16) par coopération avec l'élément d'étanchéité (7) sur la tête d'enroulement (5) et une garniture d'étanchéité dynamique (15) par coopération avec les éléments (13) pourvus des prolongements axiaux sur le rotor (8), afin de rendre l'entrefer étanche.

2. Machine dynamo-électrique rotative (1) selon la revendication 1, **caractérisée en ce que** l'élément d'étanchéité est réalisé sous la forme d'une surface d'étanchéité (7) au niveau de la tête d'enroulement (5).

3. Machine dynamo-électrique rotative (1) selon la revendication 2, **caractérisée en ce que** la surface d'étanchéité (7) sur la tête d'enroulement (5) est réalisée sous la forme d'un tapis de feutre qui peut y être disposé.

4. Machine dynamo-électrique rotative (1) selon la revendication 1, **caractérisée en ce que** la garniture d'étanchéité statique (7) possède au moins une lèvre d'étanchéité en matériau isolant.

5. Machine dynamo-électrique rotative (1) selon l'une des revendications précédentes, **caractérisée en ce que** la bague porteuse (12) au niveau du flasque (11) possède au moins un prolongement (27) radial, vu dans la direction périphérique, qui forme avec l'élément d'étanchéité, en particulier la surface d'étanchéité (7) sur la tête d'enroulement (5), une garniture d'étanchéité statique (16).

6. Machine dynamo-électrique rotative (1) selon l'une des revendications précédentes, **caractérisée en ce que** la bague porteuse (12) au niveau du flasque possède des éléments complémentaires qui forment, conjointement avec les éléments (13) sur le rotor (8), une garniture d'étanchéité à labyrinthe en tant que garniture d'étanchéité dynamique (15).

7. Machine dynamo-électrique rotative (1) selon l'une des revendications précédentes, **caractérisée en ce que** la longueur de conducteur (AB) d'une bobine (28) du système d'enroulement (21) dans la longueur de partie active (20) du stator (2) est inférieure ou égale à la longueur de conducteur (BC) de cette bobine (28) dans la tête d'enroulement (5).

8. Véhicule de traction, notamment véhicule ferroviaire, bus électrique ou camion minier, comprenant au moins une machine dynamo-électrique rotative (1) selon l'une des revendications précédentes.

9. Aérogénérateur comprenant au moins une machine dynamo-électrique rotative (1) selon l'une des revendications précédentes 1 à 7.
